# EUROPÄISCHE PATENTSCHRIFT

(11) **EP 0 502 346 B1**
(45) Veröffentlichungstag und Bekanntmachung des Hinweises auf die Patenterteilung: **19.04.1995**
(21) Anmeldenummer: 92102454.3
(22) Anmeldetag: 14.02.1992
(51) Int. Cl.: A01B 15/08, A01B 3/40

(54) **Pflugkörper mit doppelseitigem Streichblech**
Plough body with double-sided moldboard
Corps de charrue avec versoir à double côtés

(30) Priorität: 02.03.1991 DE 4106749
(43) Veröffentlichungstag der Anmeldung: 09.09.1992
(73) Patentinhaber: Maschinenfabriken Bernard Krone GmbH, D-48480 Spelle (DE)
(72) Erfinder: Krone, Bernard, W-4441 Spelle (DE); Temmen, Hugo, Ing. (grad), W-4441 Spelle (DE)
(74) Vertreter: Busse, Volker, Dipl.-Ing. Dr.jur.

(56) Entgegenhaltungen:
- WO-A-88/01129
- DE-C- 855 775
- FR-A- 914 000
- FR-A- 2 604 850

## Beschreibung

Die Erfindung bezieht sich auf einen Schwenkpflug mit zumindest einem ein doppelseitiges Streichblech umfassenden, an einem Pflugrahmen abstützbaren Pflugkörper in einer Ausbildung gemäß dem Oberbegriff des Patentanspruches 1.

Ein Schwenkpflug mit den Pflugkörpern zugeordneten doppelseitigen Streichblechen ist aus der US-PS 4,800,963 bekannt. Derartige Schwenkpflüge eignen sich aufgrund der besonderen Ausbildung der Pflugkörper zum Pflügen in Rechts- oder Linksablage. Ein erster Vorteil eines derartigen Schwenkpfluges ist in seinem geringen Gewicht begründet. Da mit demselben Pflugkörper durch Verschwenkung mit dem Pflugrahmen oder durch Verdrehung des Pflugkörpers um seine Hochachse am Pflugrahmen eine Rechts- oder Linksablage des Furchenbalkens erreicht wird, ist die Hälfte der Pflugkörper gegenüber herkömmlichen Drehpflügen in vorteilhafter Weise eingespart. Ebenfalls kann der Dreipunktanbaubock des Schwenkpfluges leichter und kostengünstiger ausgeführt werden, da das Gewicht vom Pflugholm und den Pflugkörpern die Gestaltung des Dreipunktanbaubockes bestimmen. Leichtes Pfluggewicht ermöglichen wiederum eine optimale Zugkraftauslastung des ziehenden Schleppers, da die auf dem Markt angebotenen Schlepper einen Pflug auch dann noch beim Pflügen ziehen können, wenn die Hubkraft der Dreipunkthydraulik bereits nicht mehr ausreicht, um den gesamten Pflug auszuheben. Das Verhältnis Zugkraft zu Hubkraft beim Schlepper ist nicht ausgeglichen. Das Pfluggewicht bestimmt deshalb die Schleppergröße. Bei Schwenkpflügen mit Pflugkörpern mit doppelseitigem Streichblech ist es jedoch von Nachteil, daß die Saatbettaufbereitung von Ackerflächen mit Erdbodenoberflächen, die durch gewollte und/oder ungewollte organische Substanzen wie Bewuchs, Gründünger, Stalldung, Mähdräscherstroh, Maisstoppeln, Maisstroh oder dergleichen gekennzeichnet sind, für Nachfolgemaschinen wie Säh- und Drillmaschinen nicht befriedigend auszuführen ist. Beim Pflügen werden die auf der Erdoberfläche befindlichen organischen Substanzen nicht genügend in die Furche eingelegt, so daß der gepflügte Teil überwiegend an der Erdbodenoberfläche mit diesen organischen Substanzen optisch durchsetzt ist. Ferner kann es oberhalb der doppelseitigen Streichbleche zwischen Streichblechoberkante und Pflugrahmen immer wieder zum Zusammenschieben oder zu Anhäufungen dieser organischen Substanzen und damit zu Verstopfungen und Ablagerungen oberhalb des fertiggepflügten Ackers kommen. Säh- und Drillmaschinen sind auf einem unbefriedigt gepflügten Acker nicht optimal einsetzbar und es kommt zu Verstopfungen in der Säh- oder Drillschare. Eine exakte Kornablage in gleichbleibender Tiefe ist damit ebenfalls nicht mehr gewährleistet.

Der Landwirt ist jedoch bei der Saatbeetaufbereitung, hier insbesondere beim Pflügen, bestrebt, die sich im Bereich der Erdoberfläche (Erdbodenkrume) befindlichen Substanzen in die offene Furche zu leiten, so daß sie vom gewendeten Furchenbalken von oben abgedeckt werden. Bei herkömmlichen Dreh- und Beetpflügen hat man hier in der Praxis bereits Abhilfe geschaffen, indem bei Pflugkörpern mit einseitigem Streichblech am Streichblech oberhalb ein fest oder manuell verstellbares Einlegeblech (auch als Stroheinweisblech bekannt) vorgesehen ist. Ein derartiges Einlegeblech ist beispielsweise in dem DE-GM 18 44 837 offenbart. Ein derartiges Einlegeblech ist jedoch nicht bei Schwenkpflügen mit Pflugkörpern mit doppelseitigen Streichblechen vorzusehen, da durch die vorzuwählende abwechselnde Stellung des doppelseitigen Streichbleches mit Scharteil beim Pflügen und zum Gepflügten hin bei Rechts- oder Linksablage das für den momentanen Einlegevorgang nicht erforderliche zweite Einlegeblech den auf dem Streichblech momentan befindlichen Teil des Furchenbalkens bei seinem Wendevorgang zur Furche hin hindert. Ein dem Furchenbalken beim Pflügen entgegenstehendes Hindernis verhindert eine gezielte Führung des Furchenbalkens auf dem Streichblech und erfordert demzufolge eine höhere Zugkraft des Schleppers.

Aus der FR E 2604850 ist ein Schwenkpflug der eingangs genannten Art bekannt mit jeweils ein doppelseitiges Streichblech umfassenden Pflugkörpern, die in Hintereinanderanordnung an einem nicht näher gezeigten Pflugrahmen abgestützt sind. Die Streichbleche sollen in Richtung zu den Seitenaußenkanten hin als auch zu den oberen und unteren Kanten gewölbt ausgebildet sein. An den jeweiligen oberen Seitenaußenbereichen sind verschwenkbare Einlegebleche anzuordnen. Diese sind zweiteilig ausgebildet und um jeweils eine Achse schwenkbar gelagert. Den Einlegeblechen sind Kettenelemente zugeordnet, um den Schwenkvorgang in die Betriebsstellung unterstützen zu können. Die Einlegebleche dieses vorbekannten Schwenkpfluges erstrecken sich mithin mit Abstand zum Pflugrahmen bzw. zur Mitte des Streichbleches links und rechts neben diesen. In der zu wählenden Links- oder Rechtsablagebetriebsstellung mit den links oder rechts eingestellten Streichblechen befindet sich die Gelenkachse des jeweils wirksamen linken oder rechten Streichbleches unmittelbar im Bereich der wirksamen Schnittkante des Streichbleches. Das dem zu pflügenden Erdreich unmittelbar nahegelegene Abweiserblech kann daher von nur einem geringen Teil des zu wendenden Erdreiches beaufschlagt werden. Da eine selbsttätige Überführung in die jeweilige Betriebsstellung dadurch bedingt auch nicht ohne weiteres möglich ist, sind die Ketten vorgesehen, um die Überführung des Bleches in die Betriebsstellung unterstützen zu können. Ein Glattstreichen des gepflügten Erdreiches ist durch das der Schnittkante in der jeweiligen Betriebsstellung nahegelegene Einlegeblech auch nicht möglich. Deshalb ist das Einlegeblech doppelt auszubilden, da das Glattstreichen des gepflügten Erdreiches durch das der Schnittkante jeweils abgewandte andere Einlegeblech übernommen werden muß. Der zum Einweisen von Stroh und zum Glattstreichen des Gepflügten erforderliche bauliche Aufwand ist daher bei diesem vorbekannten Schwenkpflug erheblich. Darüber hinaus sind auch im Alltagsbetrieb Risiken bezüglich Verschleiß, Verstopfungen und dergleichen gegeben. Bei diesem vorbekannten Schwenkpflug mit seinen, mit Abstand hintereinander angeordneten Streichblechen ist nämlich der freie Durchgang für das umzupflügende Erdreich zwischen zwei hintereinander angeordneten Blechen durch das jeweilige in Betriebsstellung überführte Einlegeblech und dem diesen benachbarten Grindel außerordentlich beengt.

Es ist daher Aufgabe der vorliegenden Erfindung, einen einfach bauenden und relativ kostengünstig zu fertigenden Schwenkpflug der eingangs genannten Art zu schaffen, mit dem eine optimale Pflugarbeit auch bei verunreinigter Erdoberfläche in Rechts- oder Linksablage ausführbar ist und bei dem ein Einlegeblech sicher selbsttätig in die Betriebsstellung zu überführen ist. Zudem soll das Verstopfungsrisiko vermindert sein.

Zur Lösung dieser Aufgabe zeichnet sich der Schwenkpflug der eingangs genannten Art durch die im kennzeichnenden Teil des Anspruchs 1 angegebenen Merkmale aus. Hinsichtlich wesentlicher weiterer Ausgestaltungen wird auf die Ansprüche 2 bis 16 verwiesen.

Durch die Ausbildung des Einlegebleches als Zentralschwenkpendel ist zunächst sowohl ein Stroheinweisevorgang als auch ein Glattstreichvorgang des Gepflügten sicherzustellen. Das eine zentrale Schwenkpendel kann sowohl in Links- als auch in Rechtsablagebetriebsstellung das Streichblech wirksam voll überdecken, so daß sonstige zusätzliche Teile entbehrlich sind. Hilfsvorrichtungen z.B. in Gestalt einer Kette, um das Einlegeblech sicher in die zu wählende Links- oder Rechtsablagebetriebsstellung zu überführen, sind entbehrlich. In der jeweiligen Betriebsstellung ergibt sich darüber hinaus auch noch der Vorteil, daß der Abstand zu einem vorgeordneten Streichblech gegenüber dem bekannten Schwenkpflug wesentlich erhöht ist, so daß der freie Durchgang für das zu pflügende Erdreich wesentlich höher ist. Damit sind Verstopfungsrisiken so gut wie nicht gegeben. Gleichfalls ist durch Anlenkung des Zentralschwenkpendels und Schwenkbarkeit um die in der Symmetrieebene liegende Schwenkachse und die Rückstellung infolge Schwerkraft sichergestellt, daß ohne das Erfordernis zusätzlicher Hilfsmittel das Zentralschwenkpendel selbsttätig in seine Ausgangsstellung zurückschwenkt.

Durch die besondere Ausgestaltung und Aufhängung des Einlegebleches oberhalb seines doppelseitigen Streichbleches als kompakte Einheit mit vorzugsweise als Befestigungsrücken ausgebildetem Drehteil, an dem zwei gebogene, spiegelbildlich ausgebildete an einem Ende V-förmig zusammengeführte Schenkelbleche fest verbunden sein können, ist bei Beginn des Pflügens oder nach dem Einsetzen des Pflugkörpers als Einheit eines Pfluges in den Erdboden vom momentan zu wendenden Furchenbalken das Einlegeblech in eine durch einen Anschlag begrenzte Links- oder Rechtsablagebetriebsstellung zu schwenken und zu halten. Hierbei wird durch die einstückige Ausgestaltung und beidseitige Anwendbarkeit des als freies Schwenkpendel ausgebildeten Einlegebleches das nicht in Arbeitslage befindliche freie Schenkelblech in einen Freiraum geschwenkt, der beim Pflügen außerhalb des vom Furchenbalken selbst durchlaufenden momentanen Raumes liegt. Wird der Pflugkörper beispielsweise am Furchenende nach dem Pflügen einer Furche in Rechtslage ausgehoben, so schwenkt das Einlegeblech aufgrund der Schwerkraft und der Schräglage seiner Schwenkachse in eine Mittelstellung zum doppelseitigen Streichblech bzw. Ausgangsstellung und behält diese Stellung auch während eines Verstellvorgangs des Pflugkörpers zum Pflügen einer Furche in Linksablage bei. Nach dem Wenden des Schleppers auf einem Vorgewende eines Ackers kann der Schwenkpflug nun erneut zum Pflügen einer Furche in Linksablage in den Erdboden eingesetzt werden. Das Einlegeblech wird auch jetzt von dem zu pflügenden Furchenbalken, wie oben im einzelnen näher beschrieben, in Arbeitslage verschwenkt und an einem Anschlag gehalten. Es wird jedoch nun das sich vorher im Freiraum befindliche zweite Schenkelblech vom Furchenbalken beaufschlagt.

Ein herkömmlicher Schwenkpflug mit doppelseitigem Streichblech läßt sich aufgrund eines baulich besonders einfach auszuführenden, schwenkbeweglich aufzuhängenden und von zwei Seiten benutzbaren Einlegebleches nun auch zur optimalen Saatbettaufbereitung von Ackerfläche mit Erdbodenoberflächen, die durch gewollte und/oder ungewollte organische Substanzen wie Bewuchs, Gründünger, Stalldung, Mähdrescherstroh, Maisstoppeln, Maisstroh od. dgl. gekennzeichnet sind, nachrüsten. Teile wie Anlenk- und Stellhebel, Getriebeteile und/oder Hydraulikeinheiten entfallen, da das Einlegeblech nur durch eine Rückstellkraft aufgrund seiner Schwerkraft und der vom Furchenbalken auf dieses einwirkenden Kraft aus einer Arbeitslage in eine zweite schwenkbar ist.

Zur weiteren Erläuterung der Erfindung wird auf die Zeichnungen und auf die nachfolgende Beschreibung verwiesen. In den Zeichnungen ist die Erfindung anhand eines Ausführungsbeispiels eines Schwenkpfluges erläutert, der insbesondere Gegenstand bei einem Pflug gemäß der US-PS 4,800,963 ist, auf die ergänzend zur nachfolgenden Beschreibung verwiesen wird. In den Zeichnungen zeigen:
- Fig. 1: eine Seitenansicht eines Ausführungsbeispiels eines Pflugkörpers eines Schwenkpfluges nach der Erfindung mit in Mittelstellung geschwenktem Einlegeblech;
- Fig. 2: eine Draufsicht auf den Pflugkörper gem. Fig. 1;
- Fig. 3: eine vergrößerte perspektivische Darstellung des Einlegebleches in Arbeitsstellung an einem Anschlag liegend bei einer möglichen Linksablage des Furchenbalkens;
- Fig. 4: eine perspektivische Darstellung eines Pflugkörpers in einer Arbeitsstellung für eine Rechtsablage des Furchenbalkens;
- Fig. 5: eine Darstellung gemaß Fig. 4 in einer Arbeitsstellung für eine Linksablage des Furchenbalkens;
- Fig. 6: eine Draufsicht eines Pflugkörpers beim Wenden eines Furchenbalkens in Rechtsablage;
- Fig. 7: eine Draufsicht gemäß Fig. 6 eim Wenden eines Furchenbalkens in Linksablage;
- Fig. 8: eine vergrößerte Seitenansicht der Aufhängung des Einlegebleches mit einstellbaren Schenkelblechen;
- Fig. 9: eine vergrößerte perspektivische Darstellung einer weiteren Ausführungsform eines Einlegebleches in einer Stellung für Linksablage des Furchenbalkens.

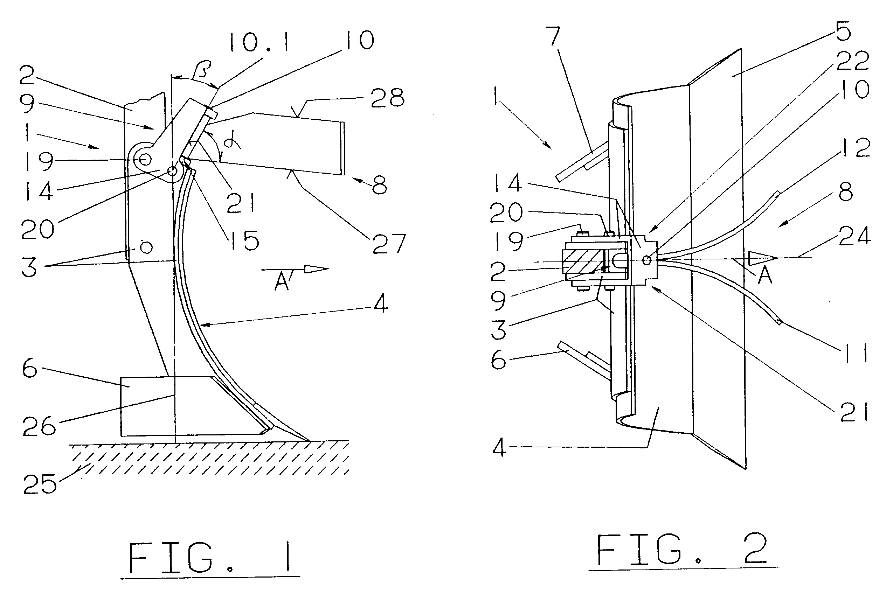

Der in den Zeichnungen veranschaulichte Pflugkörper eines Schwenkpfluges ist insgesamt mit 1 beziffert. Er besteht aus allgemein bekannten Teilen wie beispielsweise einem Grindel 2, einem Pflugrumpf 3, einem doppelseitigen Streichblech 4, einem Schar 5 und zwei Anlagen 6 und 7. Das Grindel 2 verbindet den Pflugrumpf 3 über Verbindungselemente mit einem nicht dargestellten Pflugrahmen des Schwenkpfluges, an dem ein oder mehrere Pflugkörper 1 vorhanden sein können. Das Einlegeblech 8 besteht wiederum aus einem einen Befestigungsrücken 9 bildendes Achsstück 10, an dem in Draufsicht gesehen (Fig. 2) zwei Schenkelbleche 11,12 befestigt sind, die in Pfeilrichtung (Pfeil A) V-förmig gespreizt auseinandergehen, wobei sie vorteilhafterweise in Pfeilrichtung (Pfeil A) bogenförmig nach außen zum gezielten Einlegen von organischen Substanzen in eine Furche 13 auseinandergehen. Das Achsstück 10 ist in Seitenansicht gesehen (Fig. 1) in einem Winkel von α < 90° mit den Schenkelblechen 11,12 verbunden und wird in einem Führungsbügel 14 und einer eine Bohrung 15 aufweisende Grundplatte 16 am Pflugrumpf 3 gehalten. Die Grundplatte 16 ist fest mit dem Pflugrumpf 3, beispielsweise durch eine Schweißverbindung 17, befestigt. Der Führungsbügel 14 umgreift das Einlegeblech 8 im Bereich seines Befestigungsrückens 9 mit Spiel, so daß das Achsstück 10 um seine Achse 10.1 in einer Bohrung 18 im Führungsbügel 14 und in der Bohrung 15 in der Grundplatte 16 schwenkbar geführt ist. Die Befestigung des Führungsbügels 14 ist derart, daß einmal eine bereits am Pflugkörper 1 vorhandene den Pflugrumpf 3 und das Grindel 2 zusammenhaltende Bolzen- oder Schraubverbindung 19 benutzt wird, um auch den Führungsbügel 14 zu halten. Eine zweite Bolzen- oder Schraubverbindung 20 wird zusätzlich am Pflugrumpf 3 vorgesehen, so daß der Führungsbügel 14 kippsicher montiert ist. Der Führungsbügel 14 ist ferner so ausgebildet, daß seine in Pfeilrichtung (Pfeil A) zeigenden seitlichen Kopfflächen einen Anschlag 21 und 22 für die jeweilige Arbeitsstellung des Einlegebleches 8 für das Wenden eines Furchenbalkens 23 in einer Rechts- oder Linksablage bilden. Das Einlegeblech wird hierdurch begrenzt beweglich am Pflugkörper 1 insbesondere an seinem Pflugrumpf 3 befestigt und hat durch die Anschläge 21 und 22 ein Widerlager, so daß es an dem Anschlag 21 oder 22 anliegend die organischen Substanzen gezielt in die Furche 13 einlegen kann. Damit das Einlegeblech 8 aus einer Mittelstellung gemäß Fig. 1 und 2 nach dem Einsetzen des Pflugkörpers 1 in Pflügerichtung (Pfeil B) von dem momentan zu pflügenden Furchenbalken 23 selbst, also ohne zusätzliche Antriebe wie Handhebel, Kurbeln, Getriebe od. dgl., in die richtige Arbeitsstellung am Anschlag 21 oder 22 geschwenkt wird und beim Ausheben des Pflugkörpers 1 selbsttätig wieder durch eine Rückstellkraft aufgrund der Schwerkraft in die Mittelstellung zurückgeführt wird, ist die Achse 10.1 des Achsstückes 10 besonders zum doppelseitigen Streichblech 4 angeordnet bzw. ausgerichtet. Die Achse 10.1 liegt in einer gedachten, senkrecht und quer zum doppelseitigen Streichblech 4 ausgerichteten Symmetrieebene 24 und zeigt in Pfeilrichtung (Pfeil A) gesehen von hinten unten nach vorne oben. Bei auf dem Erdboden 25 aufstehendem Pflugkörper 1 beträgt der in der Symmetrieebene 24 liegende Winkel β zwischen einer gedachten senkrechten Linie 26 (Fig. 1) zum Erdboden 25 und der Achse 10.1 des Achsstückes 10 für eine auf das Einlegeblech 8 einwirkenden Rückstellkraft aufgrund der Schwerkraft etwa 15° bis 45°, vorzugsweise 30°. Aus der Seitenansicht (Fig. 1) betrachtet, ist das Einlegeblech 8 für eine günstige Mitnahme durch den Furchenbalken 23 beim Einsetzen des Pflugkörpers 1 aus einer Mittelstellung in eine Arbeitsstellung derart gestaltet, daß eine seitliche Projektion des Einlegebleches 4 auf eine parallel hinter der Symmetrieebene liegenden Ebene, insbesondere wenigstens eine der in Längsrichtung ausgerichteten Kanten 27,28 in Fig. 1 eine zum Erdboden parallel bzw. etwas nach vorne geneigte Ausbildung zeigt. Ferner ist die Ausrichtung in Richtung nach vorne (Pfeil A) größer als nach oben in Richtung der Linie 26.

Durch die Verbindung des Achsstückes 10 mit den Schenkelblechen 11,12 als eine zusammengehörige Einheit wird beim Verschwenken eines der Schenkelbleche 11 oder 12 durch den Furchenbalken 23 das zweite zur Zeit nicht für das Einlegen von organischen Substanzen benötigte Schenkelblech 11 oder 12 in einen Freiraum 29 geschwenkt, der außerhalb vom Furchenbalken 23 selbst durchlaufenden momentanen Räumlichkeit liegt. Es befindet sich also immer dort, wo es nicht störend beim Pflügen wirkt. Es hindert den Furchenbalken 23 nicht beim Wendevorgang und die vom zur Zeit arbeitenden Schenkelblech 11 oder 12 des Einlegebleches 8 vom Furchenbalken oben abgenommenen organischen Substanzen können ungehindert der Furche 13 zugeführt werden.

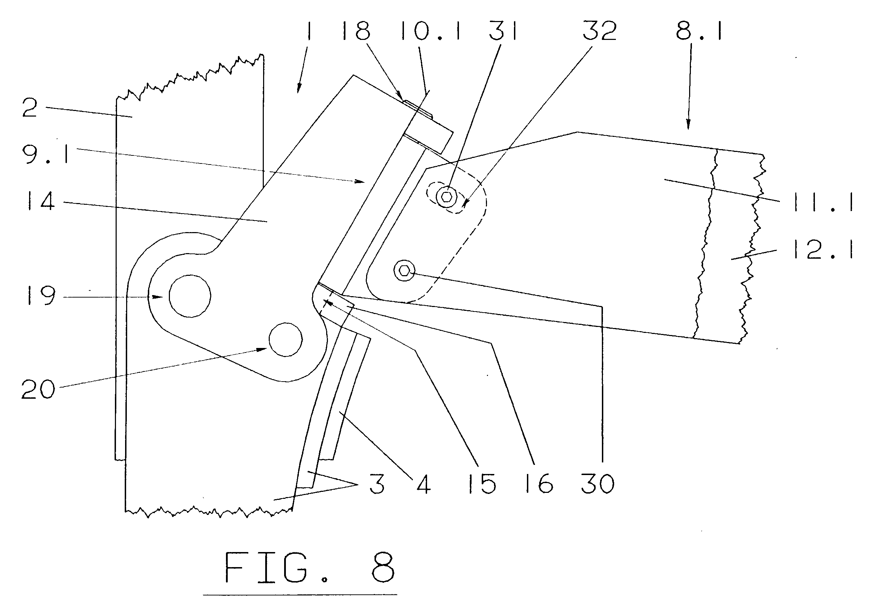

Wie nun in Fig. 8 dargestellt ist, kann das Einlegeblech 8.1 auch in seiner Ausrichtung in Längsrichtung (Pfeil A) zum Erdboden 25 und gegenüber seinen Befestigungsstücken 9.1 neigungsveränderlich ausgeführt sein. Über Befestigungsmittel wie beispielsweise Senkkopfschrauben mit Senkkopfmuttern 30,31 kann im Bereich eines Langloches 32 nach dem Lösen der Befestigungsmittel die Neigung der Schenkelbleche 11.1 und 12.1 eingestellt werden. Der Vorteil dieser Ausführungsform besteht darin, daß die Lage des Einlegebleches 8.1 den Erdbodenverhältnissen des zu pflügenden Ackers anpaßbar ist.

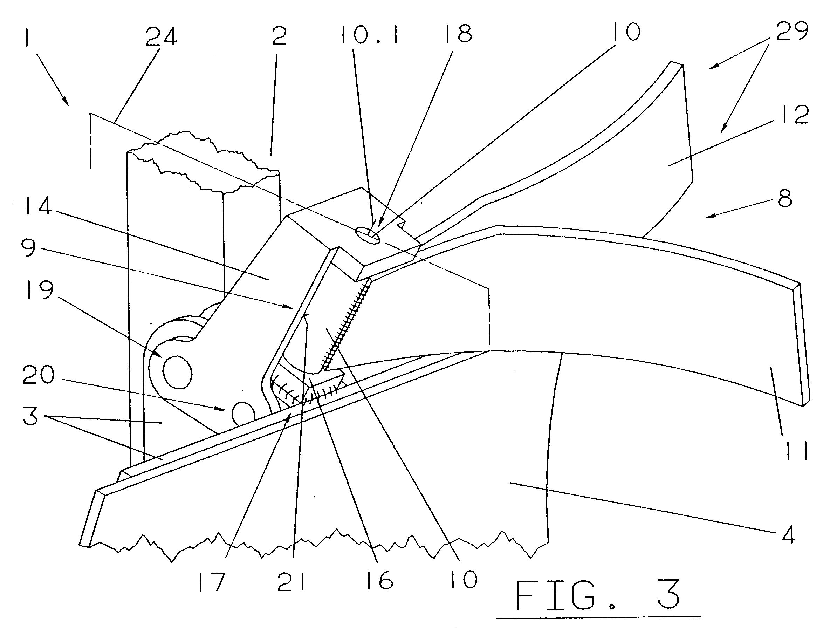

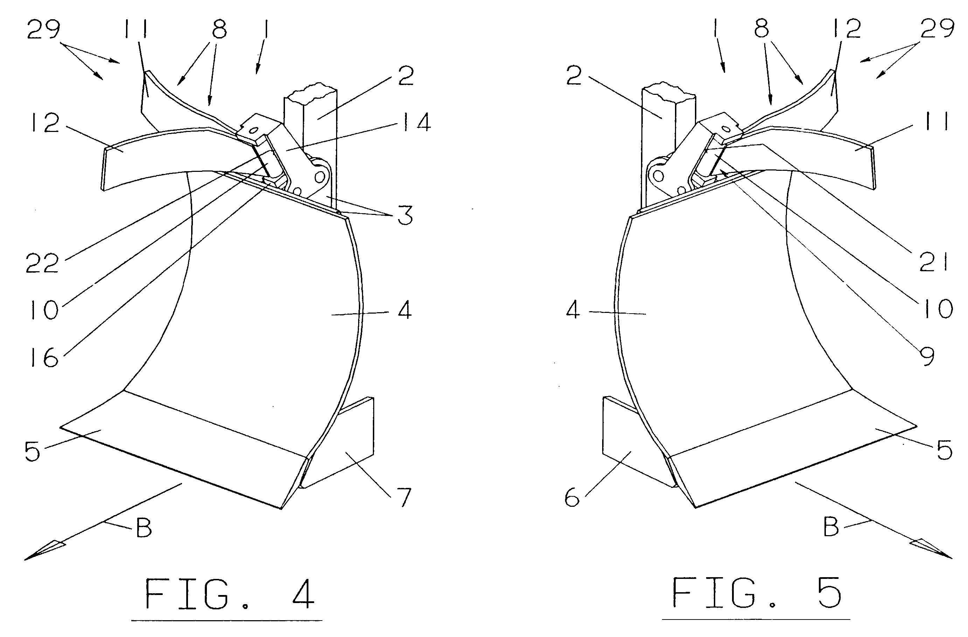

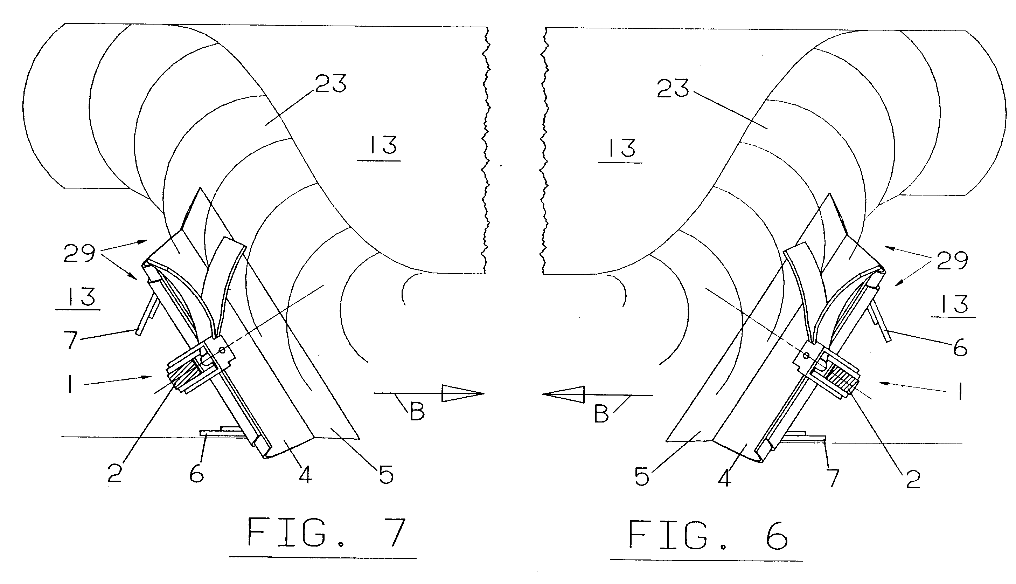

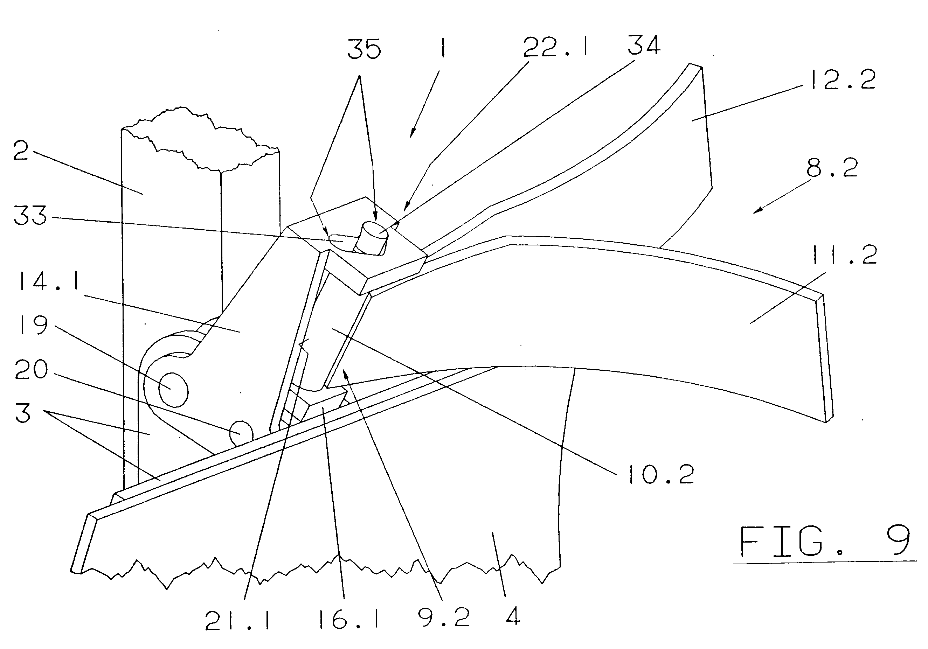

Ein weiteres Ausführungsbeispiel eines Einlegebleches 8.2, insbesondere die Art der Befestigung und Führung eines Achsstückes 10.2 seines Befestigungsrückens 9.2 im Führungsbügel 14.1, ist in der Fig. 9 dargestellt. Der Führungsbügel 14.1 hat hier anstelle einer Bohrung 18 (Fig. 3) eine Kulisse 33, in der ein Zapfen 34 des Achsstückes 10.2 geführt ist. Die Befestigung des zweiten Endes des Achsstückes 10.2 in einer Grundplatte 16.1 kann als Kugelführung (Kugel und Pfanne) ausgebildet sein. Die Befestigungsart einer Kugelführung läßt eine Bewegung in einem Kegelsektor zu, ist jedoch örtlich bestimmt. Schenkelbleche 11.2 und 12.2 werden dem Achsstück 10.2 so zugeordnet, daß sie bei in einem der Endbereiche 35 der Kulisse 33 liegenden Zapfen 34 eine Endlage an einem der Anschläge 21.1 oder 22.1 einnehmen, wie sie weiter oben bereits (zu Fig. 1 bis 8) beschrieben ist. Beim Pflügen wird auch hier das Einlegeblech 8.2 vom momentan zu wendenden Furchenbalken 23 selbst aus einer Mittelstellung in der Kulisse 33 geführt in eine Arbeitsstellung (Fig. 4 oder 5) bewegt und gehalten. Beim Ausheben des Pflugkörpers 1 erhält auch dieses Einlegeblech 8.2 eine Rückstellkraft aufgrund der Schwerkraft und stellt sich durch die Kulisse 33 geführt in eine Mittelstellung, wie in Fig. 1 und 2 dargestellt, ein.

Eine Ausführungsform, wie in Fig. 9 dargestellt, läßt sich auch umgekehrt anordnen (nicht dargestellt), d.h. die Kulissenführung für das Achsstück 10.2 läßt sich konstruktiv in der Grundplatte 16.1 unterbringen, so daß dann oben im Kopfteil des Führungsbügels 14.1 eine Kugelführung (Kugel und Pfanne) vorhanden ist. Die Form der Kulisse 33 ist dann spiegelbildlich auszuführen, damit das Achsstück 10.2 durch eine Rückstellkraft aufgrund der Schwerkraft beim Ausheben des Pflugkörpers 1 in Mittelstellung geführt werden kann. Man erhält dann eine Aufhängung eines Einlegebleches, bei der der Befestigungsrücken oben örtlich bestimmt und beweglich und unten in einer Kulisse begrenzt beweglich gehaltert ist.

Ein weiterer Vorteil besteht darin, daß durch die einfache und kostengünstige Ausbildung eines Einlegebleches und dessen Aufhängung am Pflugrumpf gemäß der Erfindung eine nachträgliche Montage auch bei bereits in der Praxis eingesetzten Pflugkörpern mit doppelseitigem Streichblech möglich ist.

## Patentansprüche

1. Schwenkpflug mit zumindest einem ein doppelseitiges Streichblech (4) umfassenden, an einem Pflugrahmen abstützbaren Pflugkörper (1), wobei der Pflugrahmen zum Wenden eines Furchenbalkens in zu wählender Rechts- oder Linksablage um eine aufwärts gerichtete Achse zwischen zwei Betriebsstellungen verschwenkbar ist, und oberhalb des doppelseitigen Streichblechs (4) ein Einlegeblech (8;8.1;8.2) angelenkt ist, das selbsttätig aufgrund einer durch den zu wendenden Furchenbalken einleitbaren, begrenzten Schwenkpendelbewegung hin zum Gepflügten in die Links- oder Rechtsablagebetriebsstellung und durch Schwerkraft in eine Ausgangsstellung überführbar ist, **dadurch gekennzeichnet,** daß das Einlegeblech (8;8.1;8.2) als ein für die Rechts- und Linksablage geeignetes Zentralschwenkpendel mit einer in der Senkrechten und quer zum Streichblech (4) ausgerichteten Symmetrieebene (24) des Streichblechs (4) gelegenen Mittelstellung (Fig. 1 und 2) zum doppelseitigen Steichblech (4) ausgebildet und durch eine Rückstellkraft aufgrund der Schwerkraft in seine Mittelstellung (Fig. 1 und 2) zum doppelseitigen Streichblech (4) überführbar ist.

2. Schwenkpflug nach Anspruch 1, **dadurch gekennzeichnet,** daß das Einlegeblech (8;8.1;8.2) um eine nach oben zeigende Achse schwenkbar ist.

3. Schwenkpflug nach Anspruch 1 oder 2, **dadurch gekennzeichnet,** daß das Einlegeblech (8;8.1) um eine in der Symmetrieebene (24) gelegene, von hinten unten nach vorne oben zeigende Schwenkachse (10.1) begrenzt schwenkbar gelagert ist.

4. Schwenkpflug nach Anspruch 3, **dadurch gekennzeichnet,** daß der in der Symmetrieebene (24) liegende Winkel β zwischen einer gedachten senkrechten Linie (26) und der Schwenkachse (10.1) des Achsstückes (10) etwa zwischen 15° und 45° liegt.

5. Schwenkpflug nach Anspruch 4, **dadurch gekennzeichnet,** daß der Winkel β 30° beträgt.

6. Schwenkpflug nach den Ansprüchen 1 bis 5, **dadurch gekennzeichnet,** daß das Einlegeblech (8.2) endseitig an seinem Befestigungsrücken (9.2) mit seinem Achsstück (10.2) in einer Kulisse (33) selbst begrenzt beweglich geführt ist.

7. Schwenkpflug nach Anspruch 6, **dadurch gekennzeichnet,** daß die endseitige Aufnahme am Befestigungsrücken (9.2) mit seinem Achsstück (10.2) des Einlegebleches (8.2) unten örtlich bestimmt und beweglich und oben in einer Kulisse (33) begrenzt beweglich erfolgt.

8. Schwenkpflug nach Anspruch 7, **dadurch gekennzeichnet,** daß die endseitige Aufnahme am Befestigungsrücken des Einlegebleches oben örtlich bestimmt und beweglich und unten in einer Kulisse begrenzt beweglich erfolgt.

9. Schwenkpflug nach einem der Ansprüche 1 bis 8, **dadurch gekennzeichnet,** daß das Einlegeblech (8;8.1;8.2) hinsichtlich seiner Formgebung in einer Ansicht von oben bei ausgehobenem Pflugkörper und in Mittelstellung (Fig. 2) zum doppelseitigen Streichblech (4) geschwenkter Anordnung derart gestaltet ist, daß es ausgehend von seinem Befestigungsrücken (9;9.1;9.2) und zwei Schenkelbleche (11;11.1;11.2;12,12.1;12.2) bildend nach vorne in Richtung Pfeil (A) im wesentlichen V-förmig gespreizt ist.

10. Schwenkpflug nach Anspruch 9, **dadurch gekennzeichnet,** daß die V-förmig angeordneten Schenkelbleche (11;11.1;11.2;12;12.1;12.2) des Einlegebleches (8;8.1;8.2) sich nach vorne und außen bogenförmig öffnen.

11. Schwenkpflug nach einem der Ansprüche 1 bis 10, **dadurch gekennzeichnet,** daß das Einlegeblech (8;8.1) bei ausgehobenem Pflugkörper und in Mittelstellung zum doppelseitigen Streichblech (4) in geschwenkter Anordnung derart gestaltet ist, daß eine Projektion des Einlegebleches (8;8.1) aus einer Seitenansicht auf eine parallel hinter einer senkrecht und quer zum doppelseitigen Streichblech (4) ausgerichteten Symmetrieebene (24) liegenden Ebene, insbesondere wenigstens eine der in Längsrichtung ausgerichteten Kanten (27,28) in Fig. 1 zum Erdboden (25) parallel oder etwas nach vorne geneigt ausgebildet und eine Ausrichtung in Richtung nach vorne (Pfeil A) größer als nach oben ist.

12. Schwenkpflug nach einem der Ansprüche 1 bis 11, **dadurch gekennzeichnet,** daß das aus einem einen Befestigungsrücken bildende Achsstück (10) und den Schenkelblechen (11;11.1;11.2;12;12.1;12.2) bestehende Einlegeblech (8;8.1;8.2) einstückig ausgebildet ist.

13. Schwenkpflug nach einem der Ansprüche 1 bis 12, **dadurch gekennzeichnet,** daß das Einlegeblech (8.1) derart ausgebildet ist, daß seine Schenkelbleche (11.1;12.1) gegenüber der endseitigen Aufnahme mittels seines Befestigungsrückens (9.1) neigungsveränderlich einstellbar sind.

14. Schwenkpflug nach Anspruch 13, **dadurch gekennzeichnet,** daß die Einstellung der Neigung der Schenkelbleche (11.1;12.1) im Bereich eines Langloches (32) erfolgt.

15. Schwenkpflug nach einem der Ansprüche 1 bis 14, **dadurch gekennzeichnet,** daß das Einlegeblech (8;8.1;8.2) nach Einsetzen des Pflugkörpers (1) während des Pflügens vom momentan zu wendenden Furchenbalken (23) selbst in der Links- oder Rechtsablagebetriebsstellung (Fig. 4, Fig. 5) an einem Anschlag (21;21.1;22;22.1) gehalten wird.

16. Schwenkpflug nach einem der Ansprüche 1 bis 15, **dadurch gekennzeichnet,** daß jeweils das unwirksame Schenkelblech (11;11.1;11.2;12;12.1;12.2) des Einlegebleches (8;8.1;8.2) bei einer Rechtsablage das Schenkelblech (11;11.1;11.2) und bei einer Linksablage das Schenkelblech (12;12.1;12.2) vom Furchenbalken (23) in einen Freiraum (29) geschwenkt wird, der außerhalb der vom Furchenbalken selbst durchlaufenden momentanen Räumlichkeit liegt.

## Claims

1. A swivel plough with at least one plough body (1) comprising a double-sided mouldboard (4) and adapted to be supported on a plough frame, whereby the plough frame is pivotable about an upwardly directed axis between two operating positions for turning a furrow bar into a selectable right-hand or left-hand position and, above the double-sided mouldboard (4) there is articulated a lay-in plate (8; 8.1; 8.2) which, by virtue of a limited swinging movement which can be initiated by the furrow bar which is to be turned, can be moved towards what has been ploughed, into a left-hand or right-hand operating position and by gravity into a starting position, characterised in that the lay-in plate (8; 8.1; 8.2) is constructed as a central swivelling member suitable for right and left-hand positioning, with, in relation to the double-sided mouldboard (4), a midway position (Figs. 1 and 2) situated in the vertical and crosswise to the plane of symmetry (24) of the mouldboard (4), and which can be moved by a restoring force, based on gravity, into its midway position (Figs. 1 and 2) in relation to the double-sided mouldboard (4).

2. A swivel plough according to claim 1, characterised in that the lay-in plate (8; 8.1; 8.2) is adapted to pivot about an upwardly directed axis.

3. A swivel plough according to claim 1 or 2, characterised in that the lay-in plate (8; 8.1) is mounted so that it can pivot to a limited degree about a pivot axis (10.1) situated in the plane of symmetry (24) and directed from a rear low position to a front high position.

4. A swivel plough according to claim 3, characterised in that the angle β in the plane of symmetry (24) between an imaginary vertical line (26) and the pivot axis (10.1) of the axle member (10) is substantially between 15° and 45°.

5. A swivel plough according to claim 4, characterised in that the angle β equals 30°.

6. A swivel plough according to claims 1 to 5, characterised in that the lay-in plate (8.2) is at one end guided on its back (9.2) so that its axle member (10.2) is capable of limited movement in a sliding member (33).

7. A swivel plough according to claim 6, characterised in that the end of the axle member (10.2) of the lay-in plate (8.2) is housed at the end of the back (9.2) so that the location of its bottom end is determined, while at the top there is limited movement in a sliding member (33).

8. A swivel plough according to claim 7, characterised in that the end housing on the fixing back of the lay-in plate is spatially determined at the top and is movable and is adapted for limited movement in a sliding member at the bottom.

9. A swivel plough according to one of claims 1 to 8, characterised in that the lay-in plate (8; 8.1; 8.2) is, with regard to its shaping and in a view from above and with the plough body lifted out and in a midway position (Fig. 2) in relation to the double-sided mouldboard (4), so designed that starting from its back (9; 9.1; 9.2), it opens out forwards in the direction of the arrow (A), substantially forming a V-shape and making two arm plates (11; 11.1; 11.2; 12; 12.1; 12.2).

10. A swivel plough according to claim 9, characterised in that the V-wisely disposed arm plates (11; 11.1; 11.2; 12; 12.1; 12.2) of the lay-in plate (8; 8.1; 8.2) open up arcuately forwards and outwards.

11. A swivel plough according to one of claims 1 to 10, characterised in that when the plough body is lifted out and in the midway position in relation to the double-sided mouldboard (4), the lay-in plate (8; 8.1) is in a pivoted arrangement so designed that a projection of the lay-in plate (8; 8.1) out of a side view onto a plane is parallel with and behind a plane of symmetry (24) orientated crosswise to the double-sided mouldboard (4), and in particular at least one of the longitudinally orientated edges (27, 28) in Fig. 1 is parallel with the ground (25) or is inclined somewhat forwardly and in that an adjustment in a direction forwards (arrow A) is greater than upwards.

12. A swivel plough according to one of claims 1 to 11, characterised in that the lay-in plate (8; 8,1; 8.2) is constructed in one piece and comprises an axle member (10) which constitutes a fixing spine and the arm plates (11; 11.1; 11.2; 12; 12.1; 12.2).

13. A swivel plough according to one of claims 1 to 12, characterised in that the lay-in plate (8.1) is so constructed that its arm plates (11.1; 12.1) are adjustable in relation to the end housing by means of its fixing spine (9.1) so that the angle of inclination is variable.

14. A swivel plough according to claim 13, characterised in that the angle of inclination of the arm plates (11.1;12.1) can be adjusted within the range offered by an elongated hole (32).

15. A swivel plough according to one of claims 1 to 14, characterised in that after insertion of the plough body (1) during ploughing, the lay-in plate (8; 8.1; 8.2) is held by the furrow bar (23) which in the left-hand or right-hand operating position (Fig.4, Fig.5) has itself to be temporarily turned against an abutment (21; 21.1; 22; 22.1).

16. A swivel plough according to one of claims 1 to 15, characterised in that whichever is the inoperative arm plate (11; 11.1; 11.2; 12; 12.1; 12.2) of the lay-in plate (8; 8.1; 8.2), the arm plate (11; 11.1; 11.2) in the case of a right-hand positioning and the arm plate (12; 12.1; 12.2) in the case of a left-hand positioning, is pivoted by the furrow bar (23) into a clear space (29) which is disposed outside the space which is at that time traversed by the furrow bar.

## Revendications

1. Charrue pivotante à versoir (4) à double face comprenant un ensemble de charrue (1) qui s'appuie sur l'age, cet age comportant pour le pivotement d'une arête de sillon, pour le choix de dépôt à droite ou à gauche autour d'un axe dirigé vers le haut, en pouvant pivoter entre deux positions de travail, et au-dessus du versoir double côté (4) est articulée une tôle d'insertion (8 ; 8.1 ; 8.2) qui peut passer automatiquement grâce à un mouvement pendulaire de pivotement, induit par l'inversion de l'arête de sillon, vers la partie labourée, en position de travail à gauche ou à droite tout en étant rappelée dans une position de repos par son poids, caractérisée en ce que la tôle d'insertion (8 ; 8.1 ; 8.2) est réalisée comme un élément pendulaire central, pivotant convenant pour un dépôt à droite et un dépôt à gauche, avec une position centrale (figures 1 et 2) située dans le plan de symétrie 24, vertical, transversal par rapport au versoir (4), plan de symétrie correspondant au versoir (4), et une force de rappel engendrée par le poids rappelle cet élément dans sa position centrale (figures 1 et 2) par rapport au versoir (4) double face.

2. Charrue selon la revendication 1, caractérisée en ce que la tôle d'insertion (8 ; 8.1 ; 8.2) peut pivoter autour d'un axe dirigé vers le haut.

3. Charrue selon la revendication 1 ou 2, caractérisée en ce que la tôle d'insertion (8 ; 8.1) est montée pivotante de manière limitée autour d'un axe de pivotement (10.1) situé dans le plan de symétrie (24), et qui est dirigé de l'arrière en bas vers l'avant en haut.

4. Charrue selon la revendication 3, caractérisée en ce que l'angle β situé dans le plan de symétrie (24), compris entre une verticale imaginaire (26) et l'axe de pivotement (10.1) de l'élément d'axe (10) est sensiblement compris entre 15° et 45°.

5. Charrue selon la revendication 4, caractérisée en ce que l'angle β est égal à 30°.

6. Charrue selon l'une des revendications 1 à 5, caractérisée en ce que la tôle d'insertion (8.2) est guidée par une extrémité sur son dosseret de fixation (9.2) par son élément d'axe (10.1) dans une coulisse (33) suivant un mouvement limité automatiquement.

7. Charrue selon la revendication 6, caractérisée en ce que le montage d'un côté sur le dosseret de fixation (9.2) avec sa pièce d'axe (10.2) de la tôle d'insertion (8.2) se fait en étant défini localement vers le bas et de manière mobile et en étant mobile de façon limitée en haut dans une coulisse (33).

8. Charrue selon la revendication 7, caractérisée en ce que le montage d'un côté sur le dosseret de fixation pour la tôle d'insertion, est défini localement en haut et mobile et se fait de manière mobile en bas de façon limitée dans une coulisse.

9. Charrue selon l'une des revendications 1 à 8, caractérisée en ce que la tôle d'insertion (8 ; 8.1 ; 8.2) par rapport à sa forme en vue de dessus, lorsque le corps de charrue est dégagé, et en position centrale (figure 2) par rapport au versoir double côté (4) est conçue de façon que partant de son dosseret de fixation (9 ; 9.1 ; 9.2) et de deux branches de tôle (11 ; 11.1 ; 11.2 ; 12 ; 12.1 ; 12.2), les branches s'écartent essentiellement en forme de V, vers l'avant en direction de la flèche (A).

10. Charrue selon la revendication 9, caractérisée en ce que les branches en tôle (11 ; 11.1 ; 11.2 ; 12 ; 12.1 ; 12.2) disposées en forme de V de la tôle d'insertion (8 ; 8.1 ; 8.2) s'ouvrent vers l'avant et vers l'extérieur en forme d'arc.

11. Charrue selon l'une des revendications 1 à 10, caractérisée en ce que la tôle d'insertion (8 ; 8.1) lorsque le corps de charrue est dégagé, et que le versoir (4) double face est en position centrale, se met en position basculée d'une manière telle qu'une projection de la tôle d'insertion (8 ; 8.1) en vue de côté sur un plan parallèle mais derrière un plan de symétrie vertical (24) transversal au versoir double côté (4), notamment l'une des arêtes (27, 28) alignée dans la direction longitudinale selon la figure 1 soit parallèle au sol (25) ou légèrement inclinée vers l'avant et que l'alignement dans la direction vers l'avant (flèche A) est plus grand que celui vers le haut.

12. Charrue selon l'une des revendications 1 à 11, caractérisée en ce que la tôle d'insertion (8 ; 8.1 ; 8.2) composée d'une pièce d'axe (10) formant un dosseret de fixation et les branches de tôle (11 ; 11.1 ; 11.2 ; 12 ; 12.1 ; 12.2) est réalisée en une seule pièce.

13. Charrue selon l'une des revendications 1 à 12, caractérisée en ce que la tôle d'insertion (8.1) est réalisée pour que ses branches de tôle (11.1 ; 12.1) soient réglables en inclinaison par rapport au logement d'extrémité par l'intermédiaire de son dosseret de fixation (9.1).

14. Charrue selon la revendication 13, caractérisée en ce que le réglage de l'inclinaison des branches de tôle (11.1 ; 12.1) se fait au niveau d'un trou oblong (32).

15. Charrue selon l'une des revendications 1 à 14, caractérisée en ce que la tôle d'insertion (8 ; 8.1 ; 8.2), est maintenue par une butée (21 ; 21.1 ; 22 ; 22.1).après insertion du corps de charrue (1) pendant le labour, à partir de l'arête de sillon (23) à retourner à ce moment, directement de la position de dépôt à gauche ou à droite (figures 4, 5).

16. Charrue selon l'une des revendications 1 à 15, caractérisée en ce que la branche de tôle non utilisée (11 ; 11.1 ; 11.2 ; 12 ; 12.1 ; 12.2) de la tôle d'insertion (8 ; 8.1 ; 8.2) pour un dépôt à droite est la branche de tôle (11 ; 11.1 ; 11.2) et pour un dépôt à gauche la branche de tôle (12 ; 12.1 ; 12.2) est basculée à partir de l'arête de sillon (23) dans un espace libre (29) qui se situe en dehors de l'espace parcouru à ce moment à partir de l'arête de sillon.
